(19) Europäisches Patentamt
European Patent Office
Office européen des brevets

(11) **EP 1 794 226 B1**

(12) **EUROPEAN PATENT SPECIFICATION**

(45) Date of publication and mention
of the grant of the patent:
**24.04.2013 Bulletin 2013/17**

(21) Application number: **04789247.6**

(22) Date of filing: **28.09.2004**

(51) Int Cl.:
*C08K 3/34* (2006.01)    *C08K 9/00* (2006.01)

(86) International application number:
**PCT/US2004/031968**

(87) International publication number:
**WO 2006/036151 (06.04.2006 Gazette 2006/14)**

(54) **NEW FUNCTIONAL ADDITIVE IN POLYMERS**

NEUES FUNKTIONELLES ADDITIV IN POLYMEREN

NOUVEL ADDITIF FONCTIONNEL DE POLYMERES

(84) Designated Contracting States:
**AT BE BG CH CY CZ DE DK EE ES FI FR GB GR HU IE IT LI LU MC NL PL PT RO SE SI SK TR**

(43) Date of publication of application:
**13.06.2007 Bulletin 2007/24**

(73) Proprietor: **Advanced Minerals Corporation**
**Santa Barbara,**
**California 93117 (US)**

(72) Inventors:
• **DANVERS, Nigel, Julian, Keith**
**F-75008 Paris (FR)**
• **WANG, Bo**
**Lompoc, CA 93436 (US)**
• **INCE, Dursun**
**Goleta, CA 93117 (US)**
• **CASTERAN, Thierry**
**F-92400 Courbevoie (FR)**
• **MASTERS, Andrew, L.**
**Santa Barbara, CA 93105-2928 (US)**
• **ROTHON, Roger Norman**
**Chester CH3 7SL (GB)**

(74) Representative: **Nash, David Allan**
**Haseltine Lake LLP**
**Redcliff Quay**
**120 Redcliff Street**
**Bristol BS1 6HU (GB)**

(56) References cited:
EP-A- 0 758 560    FR-A- 2 586 588
JP-A- 8 019 702    US-A- 4 325 844
US-A- 4 325 844    US-A- 5 153 063
US-A- 5 656 568    US-A- 6 074 474
US-A- 6 140 040

• DATABASE WPI Week 199613 Derwent Publications Ltd., London, GB; AN 1996-123347 XP002468868 & JP 08 019702 A (MITSUBISHI MATERIALS CORP) 23 January 1996 (1996-01-23)
• DATABASE CA [Online] CHEMICAL ABSTRACTS SERVICE, COLUMBUS, OHIO, US; BHIRUD, Y. B. ET AL: "Role of classification in powder coating paint production" XP002468935 retrieved from STN Database accession no. 130:339386 & CEW, CHEMICAL ENGINEERING WORLD , 34(1), 61-62 CODEN: CEWOAY; ISSN: 0009-2517, 1999,

**Description**

TECHNICAL FIELD

This invention relates to a new functional additive in polymers based on micronized diatomite product, which is useful in various polymer applications.

BACKGROUND ART

Throughout this application, various publications, patents, and published patent applications are referred to by an identifying citation; full citations for these documents may be found at the end of the specification. The disclosure of the publications, patents, and published patent specifications referred in this application are hereby incorporated by reference into the present disclosure.

Thermoplastic materials are those which soften under the action of heat and harden again to their original characteristics on cooling, that is, the heating-cooling cycle is fully reversible. By conventional definition, thermoplastics are straight and branched linear chain organic polymers with a molecular bond. Examples of well-known thermoplastics include products of acrylonitrile butadiene styrene (ABS), styrene acrylonitrile (SAN), acrylate styrene acrylonitrile (ASA), methacrylate butadiene styrene (MBS). Also included are polymers of formaldehyde, known as acetals; polymers of methyl methacrylate, known as acrylic plastics; polymers of monomeric styrene, known as polystyrenes; polymers of fluorinated monomers, known as fluorocarbons; polymers of amide chains, known as nylons; polymers of paraffins and olefins, known as polyethylenes, polypropylenes, and polyolefins; polymers composed of repeating bisphenol and carbonate groups, known as polycarbonates; polymers of terephthalates, known as polyesters; polymers of bisphenol and dicarboxylic acids, known as polyarylates; and polymers of vinyl chlorides, known as polyvinyl chlorides (PVC). High performance thermoplastics have extraordinary properties, for example, polyphenylene sulfide (PPS), which has exceptionally high strength and rigidity; polyether ketone (PEK), polyether ether ketone (PEEK), polyamide imide (PAI), which have very high strength and rigidity, as well as exceptional heat resistance; and polyetherimide (PEI), which has inherent flame resistance. Unusual thermoplastics include ionomers, i.e., copolymers of ethylene and methacrylic acid that have ionic rather than covalent crosslinking which results in behavior resembling that of thermoset plastics in their operating range; polyvinylcarbazole, which has unique electrical properties; and polymers of isobutylene, known as polyisobutylenes, which are viscous at room temperature.

Thermoset plastics are synthetic resins that are permanently changed upon thermal curing, that is, they solidify into an infusible state so that they do not soften and become plastic again upon subsequent heating. However, certain thermoset plastics may exhibit thermoplastic behavior over a limited portion of their useful application ranges, and are similarly useful as matrix components of the present invention. Some types of thermoset plastics, especially certain polyesters and epoxides, are capable of cold curing at room temperature. Thermoset plastics include alkyds, phenolics, epoxides, aminos (including ureaformaldehyde and melamine-formaldehyde), polyimides, and some silicon plastics.

Mineral fillers have been added to thermoplastics and thermosets to improve their properties including tensile strength, heat distortion temperature, and modulus. Besides improvement on the properties, fillers also reduce costs since the filled thermoplastics are sold in even larger volumes than neat thermoplastics.

The adhesion of the polymer matrix onto the filler particles has strong impact on the reinforcement. The mechanical properties can be further enhanced if the polymer matrix adheres to the filler particle surface through chemical coupling agents such as silanes.

Anti-block products are normally used in the plastic films to lessen the adhesion or blocking of the plastic film surface. This can be achieved by slightly roughening the film surface through surface treatment with wax/polymers or by adding anti-block filler products into the plastic films. Commercial anti-block filler products include synthetic silica, natural silica (such as diatomaceous earth), and other mineral products such as talc, calcium carbonate, and nepheline syenite. These additives are intended to produce microscopic roughness on the surface of the film to minimize the flat contact between adjacent layers, i.e., to prevent individual layers from sticking to one another or blocking. Although synthetic silica has good anti-block performance and optical properties, the high cost limits its applications in the plastic films. Diatomaceous earth is an effective anti-block agent with moderate cost. The anti-block performance of other mineral products such as talc, calcium carbonate, and nepheline syenite are not as effective compared to diatomaceous earth product.

Particle size has strong effect on filler performance. For reinforcement in polymers, classic theory suggests that a top size of below 10 microns gives the best impact strength as particles larger than this provide crack nucleation points within the polymer matrix. The anti-block performance and the film physical properties also strongly depend on the particle size of the filler products.

Color is also important for a filler in any application, especially where color of the end product is important. Whiter filler products with high blue light brightness normally have greater utility, as they can be used in all colored and white products and, relative to non-white fillers, improved plastic film optical properties. For these reasons, micronized diatomite products with high blue light brightness are often desirable.

There is a need for a new functional additives in polymers based on micronized diatomite product with fine particle size and high blue lightness brightness for various filler applications in polymers.

PARIS CONVENTION ARTICLE 11 DISCLOSURE

Certain elements of the invention disclosed herein were placed on display at The 17th Industrial Minerals International Congress held in Barcelona, Spain on March 28-30, 2004.

SUMMARY OF THE INVENTION

A new functional additive in polymers employs micronized diatomite according to claim 1.

In alternative embodiments, the median particle size and top particle size are respectively less than 8 microns and less than 18 microns, less than 6 microns and less than 16 microns, less than 4 microns and less than 13 microns, and, less than 3 microns and less than 10 microns. The new functional additive in polymers has a blue light brightness greater than 80 and in alternative embodiments has a blue light brightness greater than 82, 84, 86, 88, and 90.

The new functional additive in polymers in certain embodiments provides a reinforcing effect in thermoplastics such as Nylon.

The new functional additive in polymers in other embodiments can be used as functional filler in paints, coatings and papers.

Another aspect of the present invention employs a method of preparing the micronized diatomite filler product using jet mill equipment.

Still another aspect of the present invention employs a method of preparing micronized diatomite filler product using stirred media mill equipment.

Still another aspect of the present invention employs a method of preparing micronized diatomite filler product using ball mill equipment.

Still another aspect of the present invention employs a method of preparing micronized diatomite filler product using ball mill combined with air classifier.

Still another aspect of the present invention employs a method of preparing micronized diatomite filler product using Mikro-ACM® air classifying mill (Hosokawa Micron Powder Systems, Summit, New Jersey).

Still another aspect of the present invention employs a method of preparing surface modified micronized diatomite filler product by silanization. In one embodiment, the silanization is induced using "in-situ" addition of silane during the milling stage. In an exemplary embodiment, the surface of the product is modified with *gamma*-aminopropyltriethoxy silane.

In certain embodiments, the silanization increases the hydrophobic properties of the additive, for example using Dimethyldichlorosilane or Hexadimethylsilazane. In alternative embodiments, the silanization increases the hydrophilic properties of the additive, for example using aminopropyltriethoxysilane.

MODES FOR CARRYING OUT THE INVENTION

Provided is a new additive in polymers based on micronized diatomite filler product having very fine particle size. In one embodiment, there is provided an expanded diatomite product having a very fine particle size (for example, less than 3 microns).

In a further embodiment, the micronized diatomite filler product is characterized by high blue light brightness (for example, greater than 80). The micronized diatomite filler product advantageously has very fine particle size and high blue light brightness, thereby permitting much greater utility in polymer filler applications.

Diatomite products are obtained from diatomaceous earth (also known as kieselguhr), which is a sediment enriched in the siliceous frustules, i.e., shells, of diatoms. Diatoms are a diverse array of microscopic, single-celled golden brown algae of the class Bacillariophyceae, in which the cytoplasm is contained within ornate siliceous frustules of varied and intricate structure. These frustules are sufficiently durable to retain much of their porous structure virtually intact through long periods of geologic time when preserved in conditions that maintain chemical equilibrium. Currently, diatomite products may be manufactured by a variety of methods and from numerous resources, offering diversity in physical and chemical characteristics. Recent reviews (Breese, 1994; Engh, 1994) provide particularly useful introductions to the properties and uses of diatomite.

In a typical conventional method of preparing commercial diatomite products, crude ores of diatomaceous earth are crushed to a size that can be further reduced by milling, air classified, and dried in a furnace in air with subsequent air classification to achieve a desired product permeability, thus forming a dried product, commonly referred to as "natural" diatomite.

In another conventional method, a natural product can be sintered in air (commonly called calcining) at temperatures typically ranging from 1800 to 2000°F. (i.e., 1000 to 1100°C.), followed by air classification. This method achieves more permeable products, but is usually accompanied by partial conversion of amorphous silica (the natural phase of silica of diatomaceous earth ores) to cristobalite, which is a tetragonal form of crystalline silica. Products made by this method typically have cristobalite contents ranging from 5 to 40% by weight.

In another conventional method, a dried product can also be further sintered in air with the addition of a small quantity of flux (commonly called flux calcining) at temperatures typically ranging from 1800 to 2100°F. (i.e., 1000 to 1150°C.), followed by air classification. This method achieves still more permeable products, but usually with even greater conversion of amorphous silica to cristobalite, which is typically present in the range of 20 to 75% by weight. The most commonly used fluxes include soda ash (i.e., sodium carbonate, $Na_2CO_3$) and rock salt i.e., sodium chloride, NaCl), although many other fluxes, particularly salts of the alkali metals i.e., Group IA of the periodic table) are useful.

The typical chemical compositions for natural, calcined and flux calcined diatomite products are listed in the Table 1.

**Table 1**

| Constituent, % | Natural Product | Calcined Product | Flux Calcined Product |
|---|---|---|---|
| $Al_2O_3$ | 4.06 | 3.54 | 3.63 |
| $Fe_2O_3$ | 1.54 | 1.45 | 1.40 |
| CaO | 0.91 | 0.69 | 0.71 |
| $Na_2O$ | 0.53 | 0.59 | 3.86 |
| $P_2O_5$ | 0.27 | 0.18 | 0.17 |
| MgO | 0.67 | 0.54 | 0.60 |
| $K_2O$ | 0.67 | 0.62 | 0.62 |
| $SiO_2$ | 89.90 | 90.80 | 87.90 |
| $TiO_2$ | 0.21 | 0.20 | 0.21 |
| LOI* | 1.24 | 1.39 | 0.90 |
| Total | 100.00 | 100.00 | 100.00 |
| *Lost on ignition. | | | |

The high temperatures involved in the conventional methods of sintering diatomite products usually result in reduced surface area, enlargement of pores, increased wet density, and changes in impurity solubility, in addition to the expected silica phase change from the amorphous state to cristobalite.

Other methods have been described in detail for processing diatomite and preparing products made from diatomite. Much effort to improve low grade diatomaceous earths into higher grade ores has resulted in diatomite products essentially equivalent in their overall quality to commercial products obtained from naturally better ores. Examples of such work includes that of Norman and Ralston (1940), Bartuska and Kalina (1968a, 1968b), Visman and Picard (1972), Tarhanic and Kortisova (1979), Xiao (1987), Li (1989), Liang (1990), Zhong et al. (1991), Brozek et al. (1992), Wang (1992), Cai et al. (1992), and Videnov et al. (1993). Several diatomite products that have been prepared with a single property targeted for improvement, for example, reduced total iron or soluble iron concentration, have been reported by Thomson and Barr (1907), Barr (1907), Vereinigte (1913, 1928), Koech (1927), Swallen (1950), Suzuki and Tomizawa (1971), Bradley and McAdam (1979), Nielsen and Vogelsang (1979), Heyse and Feigl (1980), and Mitsui et al. (1989). A diatomite product made by Baly (1939) had low organic matter, and Codolini (1953), Pesce (1955, 1959), Martin and Goodbue (1968), and Munn (1970) made diatomite products with relatively high brightness. A diatomite product made by Enzinger (1901) reduced conventional solubility at that time. Diatomite products made by Bregar (1955), Gruder et al. (1958), and Nishamura (1958) were brighter, coupled with a lower total iron concentration. A product made by Smith (1991a,b,c; 1992a,b,c; 1993; 1994a,b) improved on the soluble multivalent cations of a flux calcined diatomite product. Schuetz (1935), Filho and Mariz da Veiga (1980), Marcus and Creanga (1965); and Marcus (1967) also reported methods for making somewhat purer diatomite products. Dufour (1990, 1993) describes a method for preparing diatomite products with low cristobalite content. Shiuh (1997, 2003) describes methods for producing extremely pure diatomite products. Hessling (2004) disclosed a grinding method to produce ultra fme diatomite products.

The micronized diatomite filler product of the present invention has very fine particle size and high blue light brightness, thereby permitting much greater utility, particularly as filler products used as additives in polymers.

Using methods disclosed herein, commercially available equipment designed to mill minerals of normal densities may be used to mill diatomite to thereby produce the micronized diatomite filler products of the present invention. The products so made are superior in many applications to existing products, and the production process is economically attractive because a high yield of the desired product is obtained.

In one embodiment, the micronized diatomite filler product is provided with a median particle size less than 10 microns and a top particle size less than 20 microns. In another embodiment, the median particle size is less than 5 microns and the top particle size less than 14 microns, for example, the median particle size less than 4 microns and the top particle size less than 13 micron, the median particle size less than 3 microns and the top particle size less than 10 micron.

In another embodiment, the micronized diatomite filler product is further characterized by having a blue light brightness greater than 80; greater than 82; greater than 83; or in one preferred embodiment, greater than 85.

In another embodiment, the micronized diatomite filler product is further characterized by surface modification using *gamma*-aminopropyltriethoxy silane.

## A. METHODS FOR PREPARING THE NEW FUNCTIONAL ADDITIVES IN POLYMER BASED ON MICRONIZED DIATOMITE FILLER PRODUCT

As described above, the new functional additive in polymers based on the micronized diatomite filler product has a defined particle size and other unique physical properties. The micronized diatomite filler product can be prepared by several methods.

One preferred method of preparing the new functional additive in polymers of the present invention is by milling on a fluidized bed jet mill.

Another preferred method of preparing the new functional additive in polymers of the present invention is by milling on a Mikro-ACM® air classifying mill.

Another preferred method of preparing the new functional additive in polymers of the present invention is by milling on a stirred media mill with ceramic lining.

Another preferred method of preparing the new functional additive in polymers of the present invention is by milling on a ball mill combined with an air classifier.

Commercially available natural, calcined and flux calcined diatomite products may be used as feed materials. For examples, Hyflo®, Celite® 545, Celite® 281 and Primsil® 30A (Hyflo®, Celite® and Primsil® are trademarks of Celite Corporation, Santa Barbara, California) are useful feed materials. In some cases, special feed materials can be prepared using flux calcination.

The new functional additive in polymers is further modified in alternative embodiments to enhance its performance in specific applications. For example, surfaces ob the additive are treated with amino-silane coupling agent to further enhance the reinforcement performance in thermoplastics and thermosets.

The new functional additive in polymers is also alternatively modified by other silanization to render the surfaces either more hydrophobic or hydrophilic using the methods appropriate for silicate minerals (Moreland, 1975; Sample, 1981). For example, the micronized diatomite filler product can be placed in a plastic vessel, and a small quantity of dimethyldichlorosilane (*i.e.,* $SiCl_2(CH_3)_2$) or hexadimethylsilazane (*i.e.,* $(CH_3)_3Si\text{-}NH\text{-}Si(CH_3)_3$) added to the vessel. Reaction is allowed to take place at the surface in the vapor phase over a 24 hr period, resulting in more hydrophobic products. Such products have applications in compositions used in chromatography, for example, and also when used in conjunction with other hydrophobic materials for improved mechanical performance, for example, in applications involving hydrocarbons and oils, and also to provide reinforcement in plastics and other polymers.

Similarly, the new functional additive in polymers can be reacted, for example, by suspending it in a solution containing 10% (w/v) aminopropyltriethoxysilane (*i.e.*, $C_9H_{23}NO_3Si$) in water, refluxing at 70°C for 3 hr, filtering the mixture, and drying the remaining solids to obtain more hydrophilic products. Such products have applications in compositions used in chromatography, for example, especially when used in conjunction with aqueous systems for improved mechanical performance, and to permit further derivatization of the product, having converted terminal hydroxyl (*i.e.*, -OH) functional groups at the surface of the diatomite product with controlled particle size distribution to aminopropyl groups (*i.e.*, $-(CH_2)_3NH_2$). The hydrophilic (*e.g.*, silanized) modified the micronized diatomite filler product can be further reacted to bind an organic compound, for example, a protein; the improved diatomite product with controlled particle size distribution thereby serves as a support for the immobilization of the organic compound. So modified, the product has utility in applications such as affinity chromatography and biochemical purification.

The surfaces of the new functional additive in polymers is also etched in certain embodiments with etchants appropriate for glasses, including, but not limited to, hydrofluoric acid (*i.e.*, HF), ammonium bifluoride (*i.e.*, $NH_4F.HF$), sodium hydroxide (*i.e.*, NaOH), fluorine, ammonia, ammonium hydroxide, or phosphoric acid. Surface etching may enhance subsequent treatment processes; for example, etching may increase the number of terminal hydroxyl groups, which in turn may subsequently react with various silanes.

A number of other reactions pertaining to the surfaces of glasses have been previously described (Hermanson, 1992). However, derivatizations of the new functional additive in polymers which offer specific properties yield products with improved efficacy.

Modifications and variations of the invention as hereinbefore set forth can be made without departing from the spirit and scope thereof.

B. <u>METHODS FOR CHARACTERIZING THE MICRONIZED DIATOMITE FILLER PRODUCT</u>

1. <u>Particle Size Distribution</u>

The particle size distribution of samples is determined in accordance with the phenomenon of scattered light from a laser beam projected through a stream of particles. The amount and direction of light scattered by the particles is measured by an optical detector array and then analyzed by a microcomputer which calculates the size distribution of the particles in the sample stream. Data reported is collected, for example, on a Leeds and Northrup Microtrac X100 laser particle size analyzer (Leeds and Northrup, North Wales, Pennsylvania). This instrument can determine particle size distribution over a particle size range from 0.12 to 704 microns. Median particle size ($d_{50}$) is defined as that size for which 50 percent of the volume that is smaller than the indicated size. The top size ($d_{90}$) is defined as that size for which 90 percent of the volume that is smaller than the indicated size

The new functional additive in polymers in one embodiment has a median particle size less than 10 microns (usually in the range of from 8 to 10 microns) and a top particle size less than 20 microns (usually in the range of from 16 to 20 microns). In another embodiment, the median particle size is less than 8 microns (for example, in the range of 5 to 8 microns) and a top particle size less than 18 microns (usually in the range of from 16 to 20 microns), the median particle size is less than 5 microns and a top particle size less than 14 microns, the median particle size is less than 4 microns and a top particle size less than 13 microns, the median particle size is less than 3 micron and a top particle size less than 10 microns.

2. <u>Blue Light Brightness</u>

The preferred method for determining the blue light brightness of the samples in the present invention uses calculation from Hunter scale color data collected on a Spectro/plus Spectrophotometer (Color and Appearance Technology, Inc., Princeton, New Jersey). A krypton-filled incandescent lamp is used as the light source. The instrument is calibrated according to the manufacturer's instructions using a highly polished black glass standard and a factory calibrated white opal glass standard. A plastic plate having a depressing machined into it is filled with sample, which is then compressed with a smooth-faced plate using a circular pressing motion. The smooth-faced plate is carefully removed to insure an even, unmarred surface. The sample is then placed under the instrument's sample aperture for the measurements.

The new functional additive in polymers for example has a blue light brightness greater than 80 (e.g., in the range from 80 to 85); has a blue light brightness greater than 85 (e.g., in the range from 85 to 90), or has a blue light brightness greater than 90 (e.g., in the range from 90 to 93).

3. <u>Oil Absorption</u>

The oil absorption capacity of the samples in the present invention is determined on a weight basis. 5 or 10 grams of the sample is placed in a 300 ml ceramic casserole. Linseed oil from a 50 ml glass burette is then added to the sample at the rate of 1 drop per second. During addition of oil, the mixture is stirred using a spatula so that each drop of oil falls on a dry position of the sample. As absorption of oil progresses, the lumps of paste form larger lumps and the oil addition rate should be decreased at this point. The absorption reaches to the end point when all of the dry sample is wet and picked up. The volume of the oil used is then recorded and the oil absorption in weight percentage can thus be calculated:

$$\text{Oil absorption (in weight percentage)} = \text{(volume of oil used (ml) x specific gravity of oil)/(weight of sample (g)) x 100}$$

### 4. Reinforcement Performance Tests in Nylon

*a. FORMULATION*

Nylon was chosen as the polymer to evaluate the new functional additive in polymers for thermoplastics since Nylon uses relatively high value fillers and has a low melt viscosity, making it more likely to penetrate and wet the test products. Nylon (PA 6), grade Akulon F-236-D from DSM (DSM Engineering Plastics, Sittard, The Netherlands) was chosen in this study due to its significantly lower processing temperature. The most commonly used silane for nylon applications, *gamma*- aminopropyltriethoxy silane was chosen, as the silane modifier.

The addition levels chosen for the test fillers were determined by two factors; the small amount of sample available in some cases and the oil absorption values. These varied from 20 -30 % by weight (10-20 % by volume). All the test fillers were evaluated with and without surface treatment with a silane coupling agent, suitable for nylon (amino-silane). The silane level used was based on knowledge of the covering power of the silane and the fillers specific surface area, and varied from 0.4 - 4 % by weight. When silane was used, coating was carried out by what is known as the "in-situ" method, (i.e. during compounding itself). This method is sufficient to show whether silane is effective, but is usually not the most efficient way of filler treatment. It also introduces traces of alcohol into the formulation, which is not always desirable. The silane coating was carried out with pre-dried fillers.

*b. COMPOUNDING AND TESTING*

As is usual with nylon compounding, all the materials were pre-dried. Where the test fillers were coated with silane, this was achieved by wetting the polymer granules with the silane prior to mixing with the filler powder. Any coating then takes place in the compounder.

Compounding was carried out using a Beetol twin-screw compounder. The polymer granules and filler powder were pre-mixed and fed from a single hopper. The melt was extruded in a double strand, which was cooled in a water bath and then pelletised. After drying, the pellets were injection moulded into the appropriate test pieces using a standard injection moulding machine. The moulded specimens were equilibrated with room conditions for one week before testing. Mechanical properties such as modulus, tensile strength, impact strength were then measured.

### C. METHODS OF USING THE MICRONIZED DIATOMITE FILLER PRODUCT

The new functional additive in polymers can be used in a manner analogous to the currently available anti-block filler products in plastic film applications.

Certain applications may gain additional benefit from using the new functional additive in polymers that has been modified or derivatized, for example, by leaching with acid or complexing agents, by etching, by silanization, or by coupling organic molecules to a silanized functionality.

The most common method of adding the new functional additive in polymers to prepare a filled material is to blend it into a mixture at a concentration needed to impart the desired level of a property. For example, to reinforce nylon, the micronized diatomite filler product may be added to a controlled-temperature twin-screw extruder to which unfilled nylon is being fed and made molten. The new functional additive in polymers is fed into the extruder through a hopper and uniformly blends in to the nylon. The mixture emerges from the extruder and is cooled. Then, for example, the mixture can be further compression molded or injection molded into useful shapes; and the molded pieces of filled nylon will be suitably reinforced compared with the unfilled nylon.

The new functional additive in polymers of the present invention can be used as a functional filler practically as a anti-block filler. Functional fillers are typically added, that is, "compounded," to other substances to make a material mixture that may commonly be referred to as "filled." The means of compounding usually allows one or more specific functional properties to be imparted to the filled material. These functional properties are often physical in nature, and may involve various mechanical or optical effects. Occasionally, chemical functionality is imparted, and this may also alter electrical properties. The new functional additive in polymers is effective when compounded in filled materials so as to impart the functionality of the improved diatomite product to the filled material.

Examples of other filler applications include use of the new functional additive in polymers distribution as a flatting agent or as an aid to improve scrubbability in paints and coatings; as an anti-block agent in polymers, such as polyethylene or polypropylene film; as a functional filler in paper, including as a drainage aid and in stickies pacification in paper manufacture; as a reinforcing agent in plastics, including nylon, polypropylene, phenolics and brake pad manufacture; and as a filler for adhesive, sealant, and joint compounds.

The new functional additive in polymers is also useful in abrasive, polishing, buffing, or cleansing formulations, wherein it may impart an abrasive property. Further, the new functional additive in polymers is useful in ceramics and ceramic mixtures, including tile, asphalt, concrete, mortar, plaster, stucco, grout, and aggregate, especially to decrease the density of these materials. The new functional additive in polymers may be applied to other architectural products, including roofmg shingles or sheets, architectural siding, flooring, or acoustical tile with similar efficacy.

The aforementioned applications describe the utility of the micronized diatomite filler product, but many other applications may be envisioned for the micronized diatomite filler product

EXAMPLES

The new functional additive in polymers based on micronized diatomite filler product of the present invention and methods for their preparation are described in the following examples, which are offered by way of illustration and not by way of limitation.

Particle size data were collected on a Leeds and Northrup Microtrac X100 laser particle size analyzer (Leeds and Northrup, North Wales, Pennsylvania).

Examples 1 to 9 were prepared using a pilot scale Alpine® AFG 400 Fluidized Bed Jet Mill (Hosokawa Micron Powder Systems, Summit, New Jersey). A commercially available diatomite product, Hyflo® was used as the feed material for Examples 1 to 5. The feed materials for Examples 6 and 7 were flux calcined diatomite using the crude from the Lompoc, California and Quincy, Washington deposits.

Examples 10 to 14 were prepared using a pilot scale Mikro-ACM® Air Classifying Mill Model 10 System (Hosokawa Micron Powder Systems, Summit, New Jersey). Commercially available diatomite products, Celite® 281 and Hyflo®, were used as the feed material for Examples 12 and 14. The feed materials for Examples 10, 11, and 13 were flux calacined diatomite using the crude from the Lompoc, California and Quincy, Washington deposits.

Example 15 was prepared using a pilot scale ceramic lined 50-SDG Attritor stirred media mill (Union Process, Akron, Ohio). A commercially available diatomite product, Hyflo®, was used as the feed material.

Examples 16, 17, 18, 21, 22 and 23 were prepared using a NETZSCH CONDUX® Conjet High Density Bed Jet Mill (NETZSCH-Feinmahltechnik GmbH, Hanau, Germany). Commercially available diatomite products, Primisil® 30A and Celite® 281, were used as the feed materials.

Examples 19 and 20 were prepared using an Alpine® ANR agitator ball mill (HOSOKAWA ALPINE Aktiengesellschaft & Co. OHG, Augsburg, Germany) and an Alpine® LK80/32 ball mill (HOSOKAWA ALPINE Aktiengesellschaft & Co. OHG, Augsburg, Germany) respectively. A commercially available diatomite product, Celite® 281, was used as the feed material.

Examples 24 and 25 were prepared using an Alpine® LK80/32 ball mill with "in-situ" addition of *gamma*-aminopropyltriethoxy silane. A commercially available diatomite product, Celite® 281, was used as the feed material. It was observed that the addition of the silane at the milling stage of the production process had facilitated the milling process and had replaced the grinding aid that was conventionally used in such applications to improve the production rate.

Tests to determine the particle size distribution, blue light brightness, and oil absorption were carried out according to the methods described above. The results for the new functional additive in polymers based on micronized diatomite filler product are shown in Table 2. The new functional additive in polymers based on micronized diatomite filler product of these examples had a median particle size less than 10 microns and a top particle size less than 20 microns, blue light brightness more than 80. As a result of the microstructural complexity of diatomite, the oil absorption of the new functional additive in polymers is generally greater than what would be expected to reinforce polymers.

**Table 2**

| Examples | Feed | Origin | Production Method | $d_{50}$ ($\mu$m) | $d_{90}$ ($\mu$m) | Blue Light Brightness | Oil Absorption (weight %) |
|---|---|---|---|---|---|---|---|
| Example 1 | Hyflo® | Almeria, Mexico | Flux Calcined | 9.11 | 18.23 | 92.55 | 82 |
| Example 2 | Hyflo® | Almeria, Mexico | Flux Calcined | 5.91 | 12.12 | 91.23 | 76 |
| Example 3 | Hyflo® | Almeria, Mexico | Flux Calcined | 4.27 | 9.12 | 91.51 | 82 |
| Example 4 | Hyflo® | Almeria, Mexico | Flux Calcined | 3.36 | 7.52 | 91.86 | |
| Example 5 | Hyflo® | Almeria, Mexico | Flux Calcined | 2.55 | 5.04 | 93.34 | |
| Example 6 | Special Feed | Lompoc, CA | Flux Calcined | 5.82 | 13.56 | 91.05 | 78 |

(continued)

| Examples | Feed | Origin | Production Method | $d_{50}$ ($\mu$m) | $d_{90}$ ($\mu$m) | Blue Light Brightness | Oil Absorption (weight %) |
|---|---|---|---|---|---|---|---|
| Example 7 | Special Feed | Quincy, WA Flux | Calcined | 8.50 | 19.30 | 87.20 | 63 |
| Example 8 | Celite® 545 | Linjinag, China | Flux Calcined | 7.19 | 16.63 | 87.32 | 45 |
| Example 9 | Celite® 545 | Linjinag, China | Flux Calcined | 6.49 | 13.70 | 87.02 | 45 |
| Example 10 | Special Feed | Lompoc, CA | Flux Calcined | 6.37 | 15.66 | 83.82 | 65 |
| Example 11 | Special Feed | Lompoc, CA | Flux Calcined | 5.73 | 12.56 | 83.50 | 60 |
| Example 12 | Hyflo® | Almeria, Mexico | Flux Calcined | 8.06 | 16.15 | 87.53 | 74 |
| Example 13 | Special Feed | Quincy, WA | Flux Calcined | 8.08 | 17.35 | 80.88 | |
| Example 14 | Celite® 281 | Lompoc, CA Flux | Calcined | 7.76 | 17.87 | 87.88 | 88 |
| Example 15 | Hyflo® | Almeria, Mexico | Flux Calcined | 3.11 | 12.11 | 92.75 | 48 |
| Example 16 | Celite® 400TC | Almeria, Mexico | Natural | 2 | | | |
| Example 17 | Primsil® 30A | Alicante, Spain | Natural | 2 | 4 | | |
| Example 18 | Celite® 281 | Alicante, Spain | Flux Calcined | 1.96 | 7.05 | | |
| Example 19 | Celite® 281 | Alicante, Spain | Flux Calcined | 2 | | | |
| Example 20 | Celite® 281 | Alicante, Spain | Flux Calcined | 2 | | | |
| Example 21 | Celite® 281 | Lompoc, CA | Flux Calcined | 2 | | | |
| Example 22 | Celite® 281 | Quincy, WA | Flux Calcined | 2 | | | |
| Example 23 | Celite® 281 | Almeria, Mexico | Flux Calcined | 2 | | | |
| Example 24 | Celite® 281 | Alicante, Spain | Flux Calcined | 2 | | | |
| Example 25 | Celite® 281 | Alicante, Spain | Flux Calcined | 2 | | | |

The performance of the new functional additive in polymers as a reinforcing filler for thermoplastics was evaluated in Nylon formulation. Two standard commercial nylon filler products, calcined clay Polarite 102 A (Imerys, Paris, France) and glass beads Spheriglass CP03 (Potters Industries Inc., Valley Forge, Pennsylvania), were used as controls. Polarite 102 A was pre-treated with an amino-silane coupling agent by the manufacturers (level unknown). These two fillers were used at 35 percent by weight. Because of the density differences, the volume percent loadings were closer than the weight percent loadings would suggest. The physical properties of these products are listed in Table 3.

**Table 3**

| Physical Properties | Polarite 102 A (Calcined Clay) | Spheriglass CP03 (Glass Beads) | Example 16 | Example 17 | Example 18 |
|---|---|---|---|---|---|
| Surface Area ($m^2$/g) | 8.5 | <1 | 30 | 10 | 2 |

(continued)

| Physical Properties | Polarite 102 A (Calcined Clay) | Spheriglass CP03 (Glass Beads) | Example 16 | Example 17 | Example 18 |
|---|---|---|---|---|---|
| $d_{50}$ (micron) | 2 | 10-20 | 2 | 2 | 2 |
| Specific Gravity | 2.6 | 2.5 | 2.1 | 2.1 | 2.1 |
| Oil Absorption | Not available | Not available | 240 | 130 | 120 |
| Hardness (Moh) | 4 | Not available | 4-5 | 4-5 | 4-5 |
| Refractive Index | 1.6 | 1.5 | 1.45 | 1.45 | 1.45? |
| Water Content (%) | <0.5 | < 0.5% | > 5.5 % | > 4 % | 1.1 % |

Table 4 shows a qualitative description on the color. The silane treatment only had a small effect on color.

**Table 4**

| product | Color |
|---|---|
| Spheriglass CP03 (glass Beads) | Dark but quite translucent |
| Polarite 102 A (calcined clay) | Dark, but not very translucent |
| Example 16 | Grey, trace of translucency |
| Example 17 | Light grey, not very translucent |
| Example 18 | Light grey, some translucency |

A rough estimate was made from the weight of injection moulded specimens, using the unfilled nylon as the standard (specific gravity =1.13). The results are listed in Table 5.

**Table 5**

| Product | Density (g/cm$^3$) |
|---|---|
| Unfilled PA | 1.13 |
| Spheriglass CP03 (glass beads, 35 % by weight nominal) | 1.43 |
| Polarite 102 A (calcined clay, 35% by weight nominal) | 1.40 |
| Example 16 (20% by weight nominal) | 1.24 |
| Example 17 (30 % by weight nominal) | 1.29 |
| Example 18 (30% by weight nominal) | 1.33 |

Powdered fillers tend to separate in the feed hopper and some often remains on the walls. This can result in lower filler levels than aimed for when small amounts are compounded. Some of the compounds were checked by ashing test to confirm the actual loading level. For example, the actual loading level for Polarite 102 A (calcined clay) was 32.2 percent by weight as compared to the nominal 35 percent by weight. At the nominal 30 percent by weight, the actual loading level for Example 17 and Example 18 were 27.7 % and 26.4%, respectively. This indicates the actual loading levels are consistent with nominal loading levels.

Table 6 shows the test results on the mechanical properties of the products. The test results for the controls are in line with published data. As expected, both glass beads and calcined clay significantly increase the modulus and the glass beads give a lower tensile and impact strength than the calcined clay, due to their larger particle size.

There appears to be a small reduction in tensile modulus. The cause of this is uncertain, but it may be due to alcohol release from the silane in the "in-situ" method. Modulus is also a key property and the levels achieved are generally slightly less than for the clay (which, assuming that the loadings were correct was at a slightly higher filler level). The impact strength is also a very important property and the high levels obtainable could be very valuable. The performance of Example 16 is less clear. Given the low loading used, the performance of the sample without silane is very reasonable. There was an apparent large loss in tensile modulus on silane treatment, but not in the more reliable flexural modulus. Much more silane was used with this sample (because of the specific surface area) and this lends support to the view that the lower tensile modulus might be due to the use of the "in-situ" coating method. To fully establish the potential for this material would need some optimization of coating method and level and examination of higher filler loadings.

**Table 6**

| Filler Product | Level wt % | Level v% | Modulus (Mpa) | | Tensile Strength (Mpa) | Impact Strength (Un-notched, KJ/m$^2$) |
|---|---|---|---|---|---|---|
| | | | Tensile | Flexural | | |
| None | 0 | 0 | 2750 | 1420 | 67 | > 100 |
| Spheriglass CP03 Glass Beads | 35 | 19 | 5265 | 2640 | 58 | 22 |
| Polarite 102 A Calcined Clay | 35 | 19 | 5700 | 2990 | 79 | 62 |
| Example 16 | 20 | 11 | 4550 | 2450 | 70 | 35 |
| Example 16 + 4% SILANE | 20 | 11 | 3750 | 2430 | 78 | 67 |
| Example 17 | 30 | 18 | 5570 | 3020 | 70 | 25 |
| Example 17 + 2 % SILANE | 30 | 18 | 5095 | 2965 | 80 | 77 |
| Example 18 | 30 | 18 | 4900 | 2445 | 70 | 36 |
| Example 18 + 0.4 % SILANE | 30 | 18 | 4760 | 2465 | 72 | > 100 |

The effect of top size of filler products on the performance in the Du Pont PA6 was studied. Filler loading was a nominal 30 % w/w unless otherwise stated. A calcined clay Polarite 102A was used as the control sample.

As shown in Table 7, reducing the top-cut does not seem to have a great effect in the range studied, although the finest size was the only one in the present series to give all unbroken samples in the un-notched impact test. While all the classified samples have similar notched impact strengths, these are significantly higher than an unclassified Example 18 tested earlier. The Polarite results suggest that this property may be giving higher results in the present series, so no firm conclusion about this can be drawn. It must also be pointed out that the unclassified Example 18 was not from the same batch as used for the classification work (none of this was supplied from Alpine), and assessment of the effect of 499 batch to batch variation in composition on filler performance is needed.

Existing theory has shown that particles over 10 microns is size have a significant detrimental effect of such mechanical properties especially impact resistance. However, the pore structure of diatomite gives the larger particles the ability to act as a network of smaller objects within the polymer matrix. The addition of silane is critical to this as it draws the polymer into the complex diatomite structure. The addition of such a surface/interface modifier the wetting of the particles is more complete and as such seen greater functionality.

**Table 7**

| Examples | Yield Stress (Mpa) | Secant Modulus (Mpa) | Flex Modulus (Mpa) | Elongation Yield (%) | Elongation Break (%) | Impact Strength (T KJ/m$^2$) | |
|---|---|---|---|---|---|---|---|
| | | | | | | Un-notched | Notched |
| Polarite 102 A | 85.4 | 5912 | 3932 | 3.3 | 7.9 | 91.5 | 13.0 |
| Example 18 | 85.3 | 4632 | nd | 2.5 | 9.4 | > 100 | 9.3 |
| Top Size 25μm | 86.5 | 5371 | 3927 | 3.9 | 4.9 | 94.5 | 14.0 |
| Top Size 20μm | 85.9 | 5095 | 3905 | 5.2 | 7.9 | 93.0 | 14.8 |
| Top Size 15μm | 88.7 | 4993 | 3936 | 4.6 | 6.7 | > 100 | 13.5 |

Table 8 displays the results on aging study. These results show quite good agreement and no real evidence of ageing. Example 25 shows an apparent increase in notched impact over the previous test result, but as discussed above, this property may be reading higher in this series anyway. Example 25 compares well with the Polarite 102 A run in the current series, but the present indications are that 2 micron material coated by the "in-situ" method is probably more effective.

**Table 8**

| Filler Loading Level (wt %) | Yield Stress (Mpa) | Secant Modulus (Mpa) | Flex Modulus (Mpa) | Elongation Yield (%) | Elongation Break (%) | Impact Strength (T KJ/m$^2$) | |
|---|---|---|---|---|---|---|---|
| | | | | | | Un-notched | Notched |
| Example 25 (Milled with 0.6 % A-1100 as the milling aid) ORIGINAL | 85.5 | 3537 | n.d. | 3.6 | 11.5 | > 100 | 9.3 |
| Example 25 ( Milled with 0.6 % A-1100 as the milling aid) SEVERAL WEEKS OLD | 84.0 | 4857 | 3785 | 4.2 | 7.2 | 92.5 | 13.6 |

The performance of Example 18 in Nylon 66 was evaluated with amino-silane coatings from OSi (A-1100) and Dow Coming (6011) (Table 9). As expected, they also show very close performance for the OSi and Dow Coming silanes. There is an indication that too much silane may be detrimental in this case, an effect not seen before. The performance at the higher filler level (45%) is still encouraging.

**Table 9**

| Silane Level (A-1100) | Yield Stress (Mpa) | Secant Modulus (Mpa) | Elongation Yield (%) | Elongation Break (%) | Impact Strength (TKJ/m$^2$) | |
|---|---|---|---|---|---|---|
| | | | | | Un-notched | Notched |
| 30 % and 0.3% A1100 | 88.0 | 5887 | 4.1 | 6.7 | > 100 | 10.0 |
| 30 % and 0.6 % A 1100 | 89.1 | 5337 | 3.8 | 16.8 | >100 | 14.3 |
| 30 % and 0.6% Dow 6011 | 88.0 | 5170 | 3.8 | 16.8 | > 100 | 13.4 |
| 30 % and 0.9% A 1100 | 90.2 | 5795 | 3.7 | 10.3 | 76.5 | 10.6 |
| 45% and 0.6% A1100 | 93.5 | 6320 | 4.0 | 5.3 | 75.5 | 13.0 |

Table 10 shows the results on three samples prepared from same Celite® 281 feed but from different origin. It was tested at the 30 % filler level with and without silane addition. All the calcined diatomite samples gave good results, with Example 22 from Quincy origin and Example 23 from Mexico origin giving especially good notched impact strengths. Example 22 from Quincy origin also gave quite a good performance uncoated.

**Table 10**

| Silane Level (A-1100) | Yield Stress (Mpa) | Secant Modulus (Mpa) | Elongation Yield (%) | Elongation Break (%) | Impact Strength (TKJ/m$^2$) | |
|---|---|---|---|---|---|---|
| | | | | | Un-notched | Notched |
| Example 21 0% | 85.9 | 5475 | 2.9 | 3.5 | 46.4 | 7.0 |
| Example 21 0.6% | 88.1 | 5308 | 8.3 | 11.1 | > 100 | 13.1 |
| Example 23 0% | 85.3 | 5579 | 2.7 | 3.4 | 50.0 | 6.5 |
| Example 23, 0.6% | 87.0 | 5592 | 5.8 | 15.8 | > 100 | 16.8 |
| Example 22 0% | 87.3 | 5092 | 3.0 | 4.0 | 75.3 | 8.5 |
| Example 22 0.6% | 87.3 | 5460 | 9.5 | 20.6 | > 100 | 15.4 |

Table 11 demonstrates that the optimal coating level lies between a relative value of 2 and 3, this is surprising given that the theoretical monolayer value would be in the order of 6. This gives rise to an interesting property of the material that there are obviously regions to the complex silica structure that are not accessible to the coating or that the surface chemistry is such that the coating does not bond. The low hydroxyl coverage of the diatomite surface due to its origin as a natural material is proving an advantage when it come to maximizing the steric interaction of molecules at the filler polymer interface.

**Table 11**

| Filler Loading Level (wt %) | Yield Stress (Mpa) | Secant Modulus (Mpa) | Flex Modulus (Mpa) | Elongation Yield (%) | Elongation Break (%) | Impact Strength (T KJ/m$^2$) Notched |
|---|---|---|---|---|---|---|
| 1 | 89.9 | 5192 | 4205 | 3.7 | 3.8 | 10.1 |
| 2 | 90.5 | 5574 | 4282 | 3.7 | 3.7 | 12.7 |
| 3 | 90.6 | 5907 | 3993 | 4.3 | 6.2 | 13.4 |
| 4 | 88.9 | 5502 | | 3.4 | 5.8 | 13.4 |

Effect of milling method on the performance in Nylon 66 was studied (Table 12). Examples 19 and 20 were prepared using a ball milling and a stirred media mill, respectively. Results for Example 18 with 0.6 % silane prepared using a jet mill are also included for comparison. The results show that the ball/stirred media milled materials performs at least as well as the jet milled product, and that the silane appears to function well, despite the milling aid. The ball/stirred media milled fillers would seem to be somewhat better than the jet milled when uncoated, and to give a slightly lower modulus, but greater toughness when silane treated.

**Table 13**

| Property | Example 18 | | Example 20 | | Example 19 |
|---|---|---|---|---|---|
| | No silane | 0.6 % silane | No silane | 0.6 % silane | 0.6% silane |
| TENSILE YIELD MPa | 90 | 90.6 | 85.1 (1.1) | 85.3 (0.8) | 89.1 (1.3) |
| SECANT MODULUS MPa | 5764 | 5907 | 4746 (147) | 4845 (408) | 5377 (622) |
| ELONGATION AT YIELD % | 1.9 | 4.3 | 3.3 (0.3) | 3.2 (1.0) | 3.8 (0.2) |
| ELONGATION AT BREAK % | 2.2 | 6.2 | 4.6 (1.0) | 10.7 (6.0) | 16.8 (3.0) |
| IMPACT kJ/m2 Un-notched | 42.5 | > 100 | 70.8 (19) | > 100 | > 100 |
| IMPACT kJ/m2 notched | 7.8 | 13.4 | 10.7 (1.2) | 14.0 (1.6) | 14.3 (1.7) |

# EP 1 794 226 B1

D. Publications

The disclosures of the publications, patents, and published patent specifications referenced below are hereby incorporated by reference into the present disclosure in their entirety.

Baly, E. C. C. et al. (1939), Trans. Faraday Soc., Vol. 35, pp. 1165-1175.

Barr, J. (1907), French Patent 377,086.

Bartuska, M. and Kalina, J. (1968a), Czech. Patent 128,699.

Bartuska, M. and Kalina, J. (1968b), Czech. Patent 128,894.

Bradley, T. G. and McAdam, R. L. (1979), U.S. Pat. No. 4,134,857.

Breese, R. (1994), in Industrial Minerals and Rocks, 6th ed., (Littleton, Colo.: Society for Mining, Metallurgy, and Exploration); pp. 397-412.

Bregar, G. W. (1955), U.S. Pat. No. 2,701,240.

Brozek, M. et al. (1992), Przegl. Gorn., Vol. 48, No. 7, pp. 16-20.

Cai, H. et al. (1992), Kuangchan Zonghe Liyong. (1992), No. 6, pp. 1-8.

Codolini, L. (1953), Italian Patent 487,158.

Dufour, P. (1990), French Patent 9,007,690.

Dufour, P. (1993), U.S. Pat. No. 5,179,062.

Engh, K. R. (1994), in Kirk-Othmer Encyclopedia of Chemical Technology, 4th ed., vol. 8 (New York: John Wiley & Sons); pp. 108-118.

Filho, F. X. H. et al. (1980), Mineraca Metalurgia Vol. 44, No. 424, pp. 14-21.

Gruder, G. et al. (1958), Rev. Chim. (Bucharest), Vol. 9, pp. 361-366.

Hermanson, G.T. et al. (1992), Immobilized Affinity Ligand Techniques (San Diego: Academic Press Inc.).

Hessling, G. (2004), Conference Proceedings of the 17th Industrial Minerals International Congress.

Heyse, K. U. et al. (1980), Brauwissenschaft, Vol. 33, pp. 137-143.

Koech, R. (1927), German Patent 469,606.

Leeds and Northrup (1993, North Wales, Pennsylvania), Microtrac® X-100 & SRA150 Operator's Manual 179551, Rev. B.

Li, F. (1990), Feijinshukang, Vol. 1989, No. 3, pp. 27-28 and 43.

Liang, C., et al. (1990), Chinese Patent 1,044,233.

Marcus, D. et al. (1964), Rev. Chim. (Bucharest), Vol. 15, No. 11, pp. 671-674.

Marcus, D. (1967), Rev. Chim. (Bucharest), Vol. 18, No. 6, pp. 332-335.

Martin, C. C. and Goodbue, D. T. (1968), U.S. Pat. No. 3,375,922.

Mitsui, Y., et al. (1989), Japanese Patent 01-153564.

Moreland, J.E. (1975), U.S. Patent 3,915,735.

Munn, D. R. (1970), U.S. Pat. No. 3,547,260.

Nielsen, R. B. and Vogelsang, C. J. (1979), U.S. Pat. No. 4,142,968.

Nishimura, Y. (1958), Japanese Patent 4,414.

Norman, J., et al. (1940), Mining Technology May 1940, pp. 1-11.

Pesce, L. (1955), Italian Patent 529,036.

Pesce, L. (1959), German Patent 1,052,964

Sample, T.E., Jr. and Horn, J.M. (1981), U.S. Patent 4,260,498.

Suzuki, T., and Tomizawa, T. (1971), Japanese Patent 46-7563.

Swallen, L. C. (1950), U.S. Pat. No. 2,504,347.

Tarhanic, L. et al. (1979), Geol. Pruzkum Vol. 21, No. 5, pp. 140-142.

Shiuh, J. C. et al. (1997), U.S. Pat. No. 5,656,568.

Shiuh, J. C. et al. (2003), U.S. Pat. No. 6,653,255.

Smith, T. R. (1991a), U.S. Pat. No. 5,009,906.

Smith, T. R. (1991b), Canadian Patent 2,044,868.

Smith, T. R. (1991c), Danish Patent 9,101,179.

Smith, T. R. (1992a), German Patent 4,120,242.

Smith, T. R. (1992b), Dutch Patent 9,101,957.

Smith, T. R. (1992c), Brazilian Patent 9,102,509.

Smith, T. R. (1993), Australian Patent 638,655.

Smith, T. R. (1994a), U.K. Patent 2,245,265.

Smith, T. R. (1994b), Japanese Patent 6-315368.

Schuetz, C. C. (1935), U.S. Pat. No. 1,992,547.

Thomson, W. and Barr. J. (1907), U.K. Patent 5397.

**EP 1 794 226 B1**

Vereinigte Stahlwerke A.-G. (1931), U.K. Patent 341,060.

Visman, J., and Picard, J. L. (1972), Canadian Patent 890,249.

Videnov, N. et al. (1993), Inter. J. Miner. Process., Vol. 39, pp. 291-298.

Wang, S. (1992), Feijinshukang, Vol. 1992, No. 3, pp. 10-13.

Xiao, S. (1986), Chinese Application 86-107500.

Zhong, S., et al. (1991), Chinese Patent 1,053,564.

**Claims**

1. A new functional additive suitable for use in polymers comprising micronized diatomite having a median particle size $d_{50}$, relative to volume particle size distribution, less than 10 microns and a top particle size $d_{90}$, relative to volume particle size distribution, less than 20 microns wherein the particle size is measured using a Leeds and Northrup Microtrac X100 laser particle size analyzer.

2. The new functional additive suitable for use in polymers of claim 1, wherein the median particle size $d_{50}$ is less than 8 microns and the top particle size $d_{90}$ less than 18 microns.

3. The new functional additive suitable for use in polymers of claim 2, wherein the median particle size $d_{50}$ is less than 6 microns and the top particle size $d_{90}$ less than 16 microns.

4. The new functional additive suitable for use in polymers of claim 3, wherein the median particle size $d_{50}$ is less than 4 microns and the top particle size $d_{90}$ less than 13 microns.

5. The new functional additive suitable for use in polymers of claim 4, wherein the median particle size $d_{50}$ is less than 3 microns and the top particle size $d_{90}$ less than 10 microns.

6. The new functional additive of claim 1, wherein the additive has a blue light brightness greater than 80 measured using a Spectro/plus Spectrophotometer.

7. The new functional additive of claim 6, wherein the additive has a blue light brightness greater than 82.

8. The new functional additive of claim 7, wherein the additive has a blue light brightness greater than 84.

9. The new functional additive of claim 8, wherein the additive has a blue light brightness greater than 86.

10. The new functional additive of claim 9, wherein the additive has a blue light brightness greater than 88.

11. The new functional additive of claim 10, wherein the additive has a blue light brightness greater than 90.

12. Use of the new functional additive as claimed in claim 1 for reinforcing thermoset plastics.

13. Use of the new functional additive as claimed in claim 1 for reinforcing thermoplastic materials.

14. Use according to claim 13, wherein the thermoplastic material is Nylon.

15. The new functional additive of claim 1, wherein the surface of the additive is modified with *gamma*-aminopropyltriethoxy silane.

16. Use of the new functional additive of claim 1 as a functional filler in paints, coatings and papers.

17. The new functional additive of claim 1 wherein the surface of the additive is modified by silanization.

18. The new functional additive of claim 17 wherein the silanization increases the hydrophobic properties of the additive.

19. The new functional additive of claim 18 wherein the silanization comprises modifying the additive with dimethyldichlorosilane.

20. The new functional additive of claim 18 wherein the silanization comprises modifying the additive with hexadimethylsilazane.

21. The new functional additive of claim 17 wherein the silanization increases the hydrophilic properties of the additive.

22. The new functional additive of claim 21 wherein the silanization comprises modifying the additive with aminopropyltriethoxysilane.

23. The new functional additive of claim 17 wherein the surface of the additive is etched prior to silanization.

24. The new functional additive of claim 23 wherein an etchant is selected from the group consisting of hydrofluoric acid, ammonium bifluoride, sodium hydroxide, fluorine, ammonia, ammonium hydroxide, and phosphoric acid.

25. The new functional additive of claim 17 wherein the silanization coating is about 2 to about 3 percent by weight.

26. A process for the preparation of the new functional additive of claim 1, the method comprising using a stirred media mill, thereby to obtain the new functional additive in polymers.

27. A process for the preparation of the new functional additive in of claim 1, the method comprising using a ball mill, thereby to obtain the new functional additive in polymers.

28. A process for the preparation of the new functional additive of claim 1, the method comprising using a combination of a ball mill combined with an air classifier, thereby to obtain the new functional additive in polymers.

29. A process for the preparation of the new functional additive in of claim 1, the method comprising using an air jet mill, thereby to obtain the new functional additive in polymers.

30. A process for the preparation of the new functional additive of claim 1, the method comprising using a Mikro-ACM® air Classifying mill, thereby to obtain the new functional additive in polymers.

31. A process for the preparation of the new functional additive in of claim 17, the method comprising using an "in-situ" addition of silane, thereby to obtain the surface modified new functional additive in polymers.

**Patentansprüche**

1. Neues funktionelles Zusatzmittel, geeignet für die Verwendung in Polymeren, umfassend mikronisiertes Diatomit mit einer mittleren Korngröße $d_{50}$, relativ zur Volumen-Korngrößenverteilung, geringer als 10 $\mu$m und einer oberen Korngröße $d_{90}$, relativ zur Volumen-Korngrößenverteilung, geringer als 20 $\mu$m, wobei die Korngröße gemessen wird mit einem Leeds and Northrup Microtrac X100 Laser-Korngrößenmessgerät.

2. Neues funktionelles Zusatzmittel, geeignet für die Verwendung in Polymeren, gemäß Anspruch 1, wobei die mittlere Korngröße $d_{50}$ geringer als 8 $\mu$m ist und die obere Korngröße $d_{90}$ geringer als 18 $\mu$m ist.

3. Neues funktionelles Zusatzmittel, geeignet für die Verwendung in Polymeren, gemäß Anspruch 2, wobei die mittlere Korngröße $d_{50}$ geringer als 6 $\mu$m ist und die obere Korngröße $d_{90}$ geringer als 16 $\mu$m ist.

4. Neues funktionelles Zusatzmittel, geeignet für die Verwendung in Polymeren, gemäß Anspruch 3, wobei die mittlere Korngröße $d_{50}$ geringer als 4 $\mu$m ist und die obere Korngröße $d_{90}$ geringer als 13 $\mu$m ist.

5. Neues funktionelles Zusatzmittel, geeignet für die Verwendung in Polymeren, gemäß Anspruch 4, wobei die mittlere Korngröße $d_{50}$ geringer als 3 $\mu$m ist und die obere Korngröße $d_{90}$ geringer als 10 $\mu$m ist.

6. Neues funktionelles Zusatzmittel gemäß Anspruch 1, wobei das Zusatzmittel eine Blaulichthelligkeit größer als 80 hat, gemessen mit einem Spectro/plus-Spektrophotometer.

7. Neues funktionelles Zusatzmittel gemäß Anspruch 6, wobei das Zusatzmittel eine Blaulichthelligkeit größer als 82 hat.

8. Neues funktionelles Zusatzmittel gemäß Anspruch 7, wobei das Zusatzmittel eine Blaulichthelligkeit größer als 84 hat.

9. Neues funktionelles Zusatzmittel gemäß Anspruch 8, wobei das Zusatzmittel eine Blaulichthelligkeit größer als 86 hat.

10. Neues funktionelles Zusatzmittel gemäß Anspruch 9, wobei das Zusatzmittel eine Blaulichthelligkeit größer als 88 hat.

11. Neues funktionelles Zusatzmittel gemäß Anspruch 10, wobei das Zusatzmittel eine Blaulichthelligkeit größer als 90 hat.

12. Verwendung des neuen funktionellen Zusatzmittels aus Anspruch 1 zum Verstärken von wärmehärtenden Kunststoffen.

13. Verwendung des neuen funktionellen Zusatzmittels aus Anspruch 1 zum Verstärken von thermoplastischen Werkstoffen.

14. Verwendung gemäß Anspruch 13, wobei der thermoplastische Werkstoff Nylon ist.

15. Neues funktionelles Zusatzmittel gemäß Anspruch 1, wobei die Oberfläche des Zusatzmittels mit *gamma*-Aminopropyltriethoxysilan modifiziert ist.

16. Neues funktionelles Zusatzmittel gemäß Anspruch 1 als funktionelles Füllmittel in Farben, Beschichtungen und Papieren.

17. Neues funktionelles Zusatzmittel gemäß Anspruch 1, wobei die Oberfläche des Zusatzmittels durch Silanisierung modifiziert ist.

18. Neues funktionelles Zusatzmittel gemäß Anspruch 17, wobei die Silanisierung die hydrophoben Eigenschaften des Zusatzmittels verstärkt.

19. Neues funktionelles Zusatzmittel gemäß Anspruch 18, wobei die Silanisierung umfasst Modifizieren des Zusatzmittels mit Dimethyldichlorosilan.

20. Neues funktionelles Zusatzmittel gemäß Anspruch 18, wobei die Silanisierung umfasst Modifizieren des Zusatzmittels mit Hexadimethylsilazan.

21. Neues funktionelles Zusatzmittel gemäß Anspruch 17, wobei die Silanisierung die hydrophilen Eigenschaften des Zusatzmittels verstärkt.

22. Neues funktionelles Zusatzmittel gemäß Anspruch 21, wobei die Silanisierung umfasst Modifizieren des Zusatzmittels mit Aminopropyltriethoxysilan.

23. Neues funktionelles Zusatzmittel gemäß Anspruch 17, wobei die Oberfläche des Zusatzmittels vor der Silanisierung geätzt wird.

24. Neues funktionelles Zusatzmittel gemäß Anspruch 23, wobei das Ätzmittel ausgewählt ist aus der Gruppe Fluorwasserstoffsäure, Ammoniumbifluorid, Nartriumhydroxid, Fluor, Ammoniak, Ammoniumhydroxid und Phosphorsäure.

25. Neues funktionelles Zusatzmittel gemäß Anspruch 17, wobei die Silanisierungsbeschichtung etwa 2 bis etwa 3 Gew.-% ist.

26. Herstellungsverfahren für ein neues funktionelles Zusatzmittel aus Anspruch 1, das Verfahren umfassend Verwendung einer Rührmedienmühle, um dadurch das neue funktionelle Zusatzmittel in Polymeren zu erhalten.

27. Herstellungsverfahren für ein neues funktionelles Zusatzmittel aus Anspruch 1, das Verfahren umfassend Verwendung einer Kugelmühle, um dadurch das neue funktionelle Zusatzmittel in Polymeren zu erhalten.

28. Herstellungsverfahren für ein neues funktionelles Zusatzmittel aus Anspruch 1, das Verfahren umfassend Verwendung einer Kombination einer Kugelmühle, kombiniert mit einem Luftsortierer, um dadurch das neue funktionelle Zusatzmittel in Polymeren zu erhalten.

29. Herstellungsverfahren für ein neues funktionelles Zusatzmittel aus Anspruch 1, das Verfahren umfassend Verwendung einer Luftstrahlmühle, um dadurch das neue funktionelle Zusatzmittel in Polymeren zu erhalten.

30. Herstellungsverfahren für ein neues funktionelles Zusatzmittel aus Anspruch 1, das Verfahren umfassend Verwendung einer Mikro-ACM®-Luftsortiermühle, um dadurch das neue funktionelle Zusatzmittel in Polymeren zu erhalten.

31. Herstellungsverfahren für ein neues funktionelles Zusatzmittel aus Anspruch 17, das Verfahren umfassend Verwendung einer "in-situ"-Zuführung von Silan, um dadurch das oberflächenmodifizierte neue funktionelle Zusatzmittel in Polymeren zu erhalten.

## Revendications

1. Nouvel additif fonctionnel utilisable dans les polymères, comprenant de la diatomite micronisée ayant une dimension médiane des particules $d_{50}$, par rapport à la distribution granulométrique volumique, qui est inférieure à 10 microns et une dimension supérieure des particules $d_{90}$, par rapport à la distribution granulométrique volumique, qui est inférieure à 20 microns, la dimension des particules étant mesurée en utilisant un granulomètre à laser Leeds and Northrup Microtrac X100.

2. Nouvel additif fonctionnel utilisable dans les polymères selon la revendication 1, où la dimension médiane des particules $d_{50}$ est inférieure à 8 microns et la dimension supérieure des particules $d_{90}$ est inférieure à 18 microns.

3. Nouvel additif fonctionnel utilisable dans les polymères selon la revendication 2, où la dimension médiane des particules $d_{50}$ est inférieure à 6 microns et la dimension supérieure des particules $d_{90}$ est inférieure à 16 microns.

4. Nouvel additif fonctionnel utilisable dans les polymères selon la revendication 3, où la dimension médiane des particules $d_{50}$ est inférieure à 4 microns et la dimension supérieure des particules $d_{90}$ est inférieure à 13 microns.

5. Nouvel additif fonctionnel utilisable dans les polymères selon la revendication 4, où la dimension médiane des particules $d_{50}$ est inférieure à 3 microns et la dimension supérieure des particules $d_{90}$ est inférieure à 10 microns.

6. Nouvel additif fonctionnel selon la revendication 1, ledit additif ayant une brillance à la lumière bleue supérieure à 80, mesurée à l'aide d'un Spectrophotomètre Spectro/plus.

7. Nouvel additif fonctionnel selon la revendication 6, ledit additif ayant une brillance de lumière bleue supérieure à 82.

8. Nouvel additif fonctionnel selon la revendication 7, ledit additif ayant une brillance de lumière bleue supérieure à 84.

9. Nouvel additif fonctionnel selon la revendication 8, ledit additif ayant une brillance de lumière bleue supérieure à 86.

10. Nouvel additif fonctionnel selon la revendication 9, ledit additif ayant une brillance de lumière bleue supérieure à 88.

11. Nouvel additif fonctionnel selon la revendication 10, ledit additif ayant une brillance de lumière bleue supérieure à 90.

12. Utilisation du nouvel additif fonctionnel tel que revendiqué dans la revendication 1 pou renforcer les plastiques thermodurcis.

13. Utilisation du nouvel additif fonctionnel tel que revendiqué dans la revendication 1 pou renforcer les matières thermoplastiques.

14. Utilisation selon la revendication 13, où la matière thermoplastique est le Nylon.

15. Nouvel additif fonctionnel selon la revendication 1, la surface dudit additif étant modifiée à l'aide de *gamma*-aminopropyltriéthoxysilane.

16. Utilisation du nouvel additif fonctionnel selon la revendication 1 comme charge fonctionnelle dans les peintures, les revêtements et les papiers.

17. Nouvel additif fonctionnel selon la revendication 1, la surface dudit additif étant modifiée par silanisation.

18. Nouvel additif fonctionnel selon la revendication 17, où la silanisation augmente les propriétés hydrophobes de l'additif.

19. Nouvel additif fonctionnel selon la revendication 18, où la silanisation comprend la modification de l'additif à l'aide de diméthyldichlorosilane.

20. Nouvel additif fonctionnel selon la revendication 18, où la silanisation comprend la modification de l'additif à l'aide d'hexadiméthylsilazane.

21. Nouvel additif fonctionnel selon la revendication 17, où la silanisation augmente les propriétés hydrophiles de l'additif.

22. Nouvel additif fonctionnel selon la revendication 21, où la silanisation comprend la modification de l'additif à l'aide d'aminopropyltriéthoxysilane.

23. Nouvel additif fonctionnel selon la revendication 17, la surface dudit additif faisant l'objet d'une attaque chimique avant la silanisation.

24. Nouvel additif fonctionnel selon la revendication 23, où un réactif d'attaque est choisi dans le groupe constitué par l'acide fluorhydrique, le bifluorure d'ammonium, l'hydroxyde de sodium, le fluor, l'ammoniac, l'hydroxyde d'ammonium et l'acide phosphorique.

25. Nouvel additif fonctionnel selon la revendication 17, où le revêtement de silanisation est d'environ 2 à environ 3 pour cent en poids.

26. Procédé pour la préparation du nouvel additif fonctionnel selon la revendication 1, le procédé comprenant l'utilisation d'un broyeur de milieux agités, pour obtenir ainsi le nouvel additif fonctionnel de polymères.

27. Procédé pour la préparation du nouvel additif fonctionnel selon la revendication 1, le procédé comprenant l'utilisation d'un broyeur à boulets, pour obtenir ainsi le nouvel additif fonctionnel de polymères.

28. Procédé pour la préparation du nouvel additif fonctionnel selon la revendication 1, le procédé comprenant l'utilisation d'une combinaison d'un broyeur à boulets combiné à un classificateur à air, pour obtenir ainsi le nouvel additif fonctionnel de polymères.

29. Procédé pour la préparation du nouvel additif fonctionnel selon la revendication 1, le procédé comprenant l'utilisation d'un broyeur à jet d'air, pour obtenir ainsi le nouvel additif fonctionnel de polymères.

30. Procédé pour la préparation du nouvel additif fonctionnel selon la revendication 1, le procédé comprenant l'utilisation d'un broyeur classificateur à air Mikro-ACM®, pour obtenir ainsi le nouvel additif fonctionnel de polymères.

31. Procédé pour la préparation du nouvel additif fonctionnel selon la revendication 17, le procédé comprenant l'utilisation d'une addition "in situ" de silane, pour obtenir ainsi le nouvel additif fonctionnel de polymères, modifié en surface.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 377086
- CZ 128699
- CZ 128894
- US 4134857 A
- US 2701240 A, Bregar, G. W.
- IT 487158
- FR 9007690
- US 5179062 A, Dufour, P.
- DE 469606
- CN 1044233
- US 3375922 A, Martin, C. C. and Goodbue, D. T.
- JP 1153564 A
- US 3915735 A, Moreland, J.E.
- US 3547260 A, Munn, D. R.
- US 4142968 A, Nielsen, R. B. and Vogelsang, C. J.
- JP 4000414 A
- IT 529036
- DE 1052964
- US 4260498 A, Sample, T.E., Jr. and Horn, J.M.
- JP 46007563 A
- US 2504347 A, Swallen, L. C.
- US 5656568 A, Shiuh, J. C.
- US 6653255 B, Shiuh, J. C.
- US 5009906 A, Smith, T. R.
- CA 2044868
- DK 9101179
- DE 4120242
- DE 9101957
- BR 9102509
- AT 638655
- GB 2245265 A, Smith, T. R.
- JP 6315368 A
- US 1992547 A, Schuetz, C. C.
- GB 5397 A, Thomson, W. and Barr. J.
- GB 341060 A, Vereinigte Stahlwerke A.-G.
- CA 890249
- CN 86107500
- CN 1053564

### Non-patent literature cited in the description

- **BALY, E. C. C. et al.** *Trans. Faraday Soc.,* 1939, vol. 35, 1165-1175
- **BREESE, R.** Industrial Minerals and Rocks. Society for Mining, Metallurgy, and Exploration, 1994, 397-412
- **BROZEK, M. et al.** *Przegl. Gorn.,* 1992, vol. 48 (7), 16-20
- **CAI, H. et al.** *Kuangchan Zonghe Liyong,* 1992, 1-8
- **ENGH, K. R.** Kirk-Othmer Encyclopedia of Chemical Technology. John Wiley & Sons, 1994, vol. 8, 108-118
- **FILHO, F. X. H. et al.** *Mineraca Metalurgia,* 1980, vol. 44 (424), 14-21
- **GRUDER, G. et al.** *Rev. Chim. (Bucharest,* 1958, vol. 9, 361-366
- **HERMANSON, G.T. et al.** Immobilized Affinity Ligand Techniques. Academic Press Inc, 1992
- **HESSLING, G.** *Conference Proceedings of the 17th Industrial Minerals International Congress,* 2004
- **HEYSE, K. U. et al.** *Brauwissenschaft,* 1980, vol. 33, 137-143
- Rev. B. **LEEDS ; NORTHRUP.** Microtrac® X-100 & SRA150 Operator's Manual 179551. 1993
- **LI, F.** *Feijinshukang,* 1990, vol. 1989 (3), 27-2843
- **MARCUS, D. et al.** *Rev. Chim. (Bucharest,* 1964, vol. 15 (11), 671-674
- **MARCUS, D.** *Rev. Chim. (Bucharest,* 1967, vol. 18 (6), 332-335
- **NORMAN, J. et al.** *Mining Technology,* May 1940, 1-11
- **TARHANIC, L. et al.** *Geol. Pruzkum,* 1979, vol. 21 (5), 140-142
- **VIDENOV, N. et al.** *Inter. J. Miner. Process.,* 1993, vol. 39, 291-298
- **WANG, S.** *Feijinshukang,* 1992, vol. 1992 (3), 10-13